# EUROPEAN PATENT SPECIFICATION

(11) **EP 2 492 029 B1**
(45) Date of publication and mention of the grant of the patent: **18.12.2013**
(21) Application number: 12155906.6
(22) Date of filing: 17.02.2012
(51) Int. Cl.: B21D 41/02, B23K 1/00, B23K 35/30, C04B 37/02

(54) **Constrained metal flanges and methods for making the same**
Eingespannte Metallflansche und Herstellungsverfahren dafür
Brides métalliques contraintes et leurs procédés de fabrication

(30) Priority: 22.02.2011 US 201113032315
(43) Date of publication of application: 29.08.2012
(73) Proprietor: General Electric Company, Schenectady, NY 12345 (US)
(72) Inventor: Van Dam, Jeremy Daniel, Niskayuna, NY 12309 (US); Denike, Karen Kettler, Niskayuna, NY 12309 (US); Haran, Kiruba Sivasubramaniam, Niskayuna, NY 12309 (US); Lipkin, Don Mark, Niskayuna, NY 12309 (US); Peterson II, Myles Standish, Niskayuna, NY 12309 (US)
(74) Representative: Illingworth-Law, William Illingworth

(56) References cited:
- DE-A1- 3 151 487
- GB-A- 769 108
- JP-A- 4 272 457
- JP-A- 63 014 829
- JP-A- 2000 343 210
- US-A- 3 191 288
- US-A- 4 890 783

## Description

### BACKGROUND

This invention relates to methods of producing constrained metal flanges, which allow the joining of a high expansion metal article with a low expansion material. In addition, the invention relates to flanged metal articles and flanged articles comprising a flanged metal component joined to a ceramic component.

Amongst the assembly techniques used at present for joining two components made of dissimilar materials, there can be found conventional mechanical assembly, which is often found to be unsuitable for reasons of bulk, of weight, cost and/or of poor dynamic behavior. The use of brazing is known for assembling together two pieces of dissimilar materials. Nevertheless, such techniques are often difficult to apply to joining a ceramic component to a metal component because of the very different thermo-mechanical and physico-chemical properties of the two materials. For example, the large differences between the thermal expansion coefficients of ceramics and metals may create undesirable residual stresses in articles comprising a ceramic component joined to a metal component. These stresses can lead to reduced-strength or non-hermetic joints and can lead to joint failure.

Ceramics are typically brittle and have little capacity to tolerate sudden changes in temperature and other sources of mechanical stress. To form an article comprising a ceramic component joined directly to a metallic material, commonly used joining techniques require that the thermal expansion characteristics of both materials be appropriately matched. The development of a metal-to-ceramic braze joint is known in the art. Typically, such an approach requires a metal component having a coefficient of thermal expansion (CTE) that is closely matched to the coefficient of thermal expansion of the ceramic. This requirement severely limits the available material options. Materials that are well-matched in CTE may exhibit undesirable characteristics, such as difficult processing, high cost, poor chemical compatibility, insufficient environmental resistance, and sensitivity to chemical contamination during processing.

US-B-3191288 discloses a method of assembling a ceramic metal component, retaining the mechanical strength can be achieved by superposing brazing filaments of lower coefficient of thermal expansion.

Thus it would be highly desirable to discover new techniques, which enable the joining of brittle low expansion materials, such as ceramics, to high strength, high expansion materials such as metals. In addition, it would be desirable that such new techniques be applicable to the joining of a broad range of metals to a broad range of ceramic materials, and in which the negative effects of large differences in the thermal expansion characteristics between the articles being joined were minimized.

### BRIEF DESCRIPTION

In accordance with one aspect of the present invention, a method as disclosed in claim 1 of making a flanged metal article is provided that includes (a) applying a first braze compound to a first portion of a metal article; (b) winding the first portion of the metal article with a length of a constraining metal member; and (c) heating an assembly of the metal article, the constraining metal member, and the first braze compound to a temperature above the solidus temperature of the first braze compound to provide a flanged metal article, wherein the metal article has a coefficient of thermal expansion CTE 1, the constraining metal member has a coefficient of thermal expansion CTE 2, and CTE 1 is greater than CTE 2.

In accordance with another aspect of the present invention, a flanged metal article is provided comprising (a) a wound first portion of a metal article comprising a length of a constraining metal member; and (b) a first braze compound in contact with the constraining metal member and a surface of the wound first portion of the metal article; wherein the metal article has a coefficient of thermal expansion CTE 1, the constraining metal member has a coefficient of thermal expansion CTE 2, and CTE 1 is greater than CTE 2.

In accordance with another aspect of the present invention according to claim 12, a flanged article is provided that comprises (a) a flanged metal component joined to a ceramic component, wherein the flanged metal component is wound with a molybdenum wire and wherein the flanged metal component comprises one or more of nickel, iron, cobalt, and chromium; and (b) a first braze compound in contact with the flanged metal component and a surface of the molybdenum wire, wherein the flanged metal component has a coefficient of thermal expansion CTE 1, the molybdenum wire has a coefficient of thermal expansion CTE 2, and CTE 1 is at least 100% greater than CTE 2.

In accordance with another aspect of the present invention according to claim 14, a method of making an article comprising a flanged metal component joined to a ceramic component is provided that includes (a) applying a first braze compound to a first portion of a metal article; (b) winding the first portion of the metal article with a length of a constraining metal member; (c) heating an assembly of the metal article, the constraining metal member and the first braze compound to a temperature above the solidus temperature of the first braze compound to provide a flanged metal article, wherein the metal article has a coefficient of thermal expansion CTE 1, the constraining metal member has a coefficient of thermal expansion CTE 2, and CTE 1 is greater than CTE 2; (d) contacting a flanged portion of the flanged metal article with a second braze compound and a ceramic article such that the second braze compound is disposed between the flanged portion of the metal article and the ceramic article; and (e) heating an assembly of the flanged metal article, the second braze compound and the ceramic article to a temperature above the solidus temperature of the second braze compound to provide the article comprising the flanged metal component joined to the ceramic component.

Other embodiments, aspects, features, and advantages of the invention will become apparent to those of ordinary skill in the art from the following detailed description, the accompanying drawings, and the appended claims.

### BRIEF DESCRIPTION OF THE DRAWING FIGURES

These and other features, aspects, and advantages of the present invention will become better understood when the following detailed description is read with reference to the accompanying drawings in which like characters represent like parts throughout the drawings, wherein:

Fig. 1 is a process flow diagram for making a metal flange of the invention.

Fig. 2 is a schematic presentation of a cross-sectional view of an assembly of the invention before heat treatment.

Fig. 3 is a schematic presentation of an assembly of the present invention comprising a cylindrical metal article, a first braze compound and a constraining metal member before heat treatment and flange formation.

Fig. 4 is a schematic presentation of a cross-sectional view of a metal flange of the invention after heat treatment.

Fig. 5 is a schematic presentation of a cylindrical metal flange of the invention after heat treatment.

Fig. 6 is a schematic presentation of an assembly of a ceramic article and a metal flange of the invention comprising a single layer of the constraining metal member.

Fig. 7 is a schematic presentation of an assembly of a ceramic article and a metal flange of the invention comprising multiple layers of the constraining metal member.

Fig. 8 is a schematic presentation of an assembly of a ceramic article and a metal flange of the invention after heat treatment.

### DETAILED DESCRIPTION

The singular forms "a", "an" and "the" include plural referents unless the context clearly dictates otherwise.

As used herein, the term "braze compound" includes both pure materials; for example, gold metal, silver metal, and palladium metal; as well as multi-component brazing materials; for example silver-copper brazing alloys, gold-nickel brazing alloys, and silver-copper-zinc brazing alloys.

In one embodiment, the present invention provides a method of making a flanged metal article, the method comprises (a) applying a first braze compound to a first portion of a metal article; (b) winding the first portion of the metal article with a length of a constraining metal member; and (c) heating an assembly of the metal article, the constraining metal member, and the first braze compound to a temperature above the solidus temperature of the first braze compound to provide a flanged metal article, wherein the metal article has a coefficient of thermal expansion CTE 1, the constraining metal member has a coefficient of thermal expansion CTE 2, and CTE 1 is greater than CTE 2.

The flanges produced according to the method of the present invention may be used in a variety of applications but are particularly useful when it is desirable to join a material having a lower coefficient of thermal expansion (CTE) to a material having a higher coefficient of thermal expansion, for example when joining a metal to a ceramic. The flanges produced according to the method of the present invention are "constrained" metal flanges in the sense that the thermal expansion characteristics of the flanges are limited relative to the metal article starting material by the constraining metal member.

The metal article used as the starting material for preparing the flanged metal articles of the invention may be any metal article in which it is desirable to form a flange. Non-limiting examples of suitable metal articles include metallic pipes, rods, plates, and vessels. As noted, the metal article is the starting point for the preparation of the flanged metal article provided by the present invention. Non-limiting examples of suitable materials of construction of the metal article include gold, nickel, titanium, silver, copper, platinum, palladium, niobium, tantalum, molybdenum, alloy 625, zirconium, cobalt, chromium, stainless steel, and combinations of these materials. In one embodiment, the metal article used to produce the flanged metal article comprises at least one of an alloy comprising nickel, an alloy comprising iron, an alloy comprising cobalt, an alloy comprising copper, and an alloy comprising aluminum. Thus, in one embodiment, the metal article starting material comprises an alloy comprising nickel. In an alternate embodiment, the metal article starting material comprises an alloy comprising iron. In yet another embodiment, the metal article comprises an alloy comprising nickel and iron. In some embodiments, the metal article comprises niobium. In one embodiment, the metal article is made of a niobium-based alloy. In yet another embodiment, the metal article consists essentially of niobium. In various embodiments, the metal article may comprise a carbon steel, a nickel alloy, a martensitic stainless steel, an austenitic stainless steel, a copper alloy, or an aluminum alloy.

In some embodiments, the metal article comprises one or more superalloys. A wide variety of superalloys are known to those of ordinary skill in the art and are suitable for use according to one or more embodiments of the present invention. In one embodiment, the metal article comprises one or more superalloys selected from the group consisting of nickel-based superalloys, iron-based superalloys, cobalt-based superalloys, and combinations of two or more of the foregoing. Nickel-based superalloys are illustrated by Astroloy, Hastelloy, INCONEL, Nimonic, Pyromet, Rene, Udimet and Waspaloy. Iron-based superalloys are illustrated by Discaloy and Incoloy. Cobalt-based superalloys are illustrated by AirResist, Elgiloy, MP35N and Stellite.

The metal article may have any desired shape; for example a cylindrical shape, a conical shape, a spherical shape, a rectangular shape, a cubic shape or even an irregular shape. In some embodiments, the metal article is a cylinder. In one embodiment, the cylindrical metal article has a thickness in a range from about 0.005 inch to about 0.10 inch. In a specific embodiment, the cylindrical metal article has a thickness of about 0.035 inch. In one embodiment, the metal article is a pipe, for example, the metal article is a nickel alloy pipe. In an alternate embodiment, the metal article is a rod.

As noted, the metal article which is the starting point for the preparation of the flanged metal article provided by the present invention has a first portion to which a first braze compound may be applied. In one embodiment, the first portion of the metal article is an end portion. In an alternate embodiment, the first portion of the metal article is a non-end portion, for example a pipe mid-section.

As noted the first braze compound, which is one of the starting materials for the preparation of the flanged metal article provided by the present invention, is disposed such that it is in contact with both the first portion of the metal article and the constraining metal member. In one embodiment, the first braze compound is applied on the first portion of the metal article before winding the constraining metal member about the first portion of the metal article. In an alternate embodiment, the first braze compound is applied to the first portion of the metal article after winding the constraining metal member about the first portion of the metal article.

The first braze compound may be selected based on a variety of factors known to those of ordinary skill in the art, for example brazing performance characteristcs (e.g. brazing temperature) and cost. A wide variety of braze compounds are known in the art and may be single-component braze compounds; for example relatively pure metals such as gold, silver and palladium; and multi component braze compounds, for example brazing alloys such as silver-copper braze alloys, silver-zinc braze alloys, copper-zinc braze alloys, silver-copper-zinc braze alloys, silver-copper-zinc-cadmium braze alloys, copper-phosphorous braze alloys, silver-copper-phosphorous braze alloys, gold-silver braze alloys, gold-copper braze alloys, gold-nickel braze alloys, gold-palladium braze alloys, palladium-based braze alloys, nickel-based braze alloys, cobalt-based braze alloys, aluminum-based braze alloys (e.g. aluminum silicon braze alloys), and active braze alloys comprising one or more reactive metal components. In a specific embodiment, the first braze compound is relatively pure gold. In one embodiment, the first braze compound is selected from the group consisting of gold-based braze compounds, copper-based braze compounds, silver-based braze compounds, platinum-based braze compounds, palladium-based braze compounds, titanium-based braze compounds, vanadium-based braze compounds, nickel-based braze compounds, and combinations thereof. In some other embodiments, the first braze compound is an active braze compound, at times herein referred to as an active braze alloy. A wide variety of braze compounds and active braze compounds are known to those of ordinary skill in the art and are commercially available.

As noted, a length of a constraining metal member is used in combination with the first braze compound to form a flanged metal article. As its name suggests, the constraining metal member constrains the metal article during heat treatment and subsequent cooling. The constraining metal member may include but is not limited to strands, filaments, wires, multifilament cables, linear constraining strips, pieces, tapes, perforated tapes, and foils. In one embodiment, the constraining metal member is a single-filament wire. In an alternate embodiment, the constraining metal member is a multi-filament wire.

In one embodiment, the constraining metal member is a linear article having dimensions of length and width, and characterized by a high aspect ratio. By linear, it is meant that the constraining metal member is susceptible to being wound or wrapped about the metal article. As used herein, the term 'aspect ratio' refers to a ratio of length to width of each constraining metal member employed. For example, an aspect ratio of a single-filament wire refers to a ratio of a length of the single-filament wire to a width (or thickness) of the single-filament wire. In some embodiments, the constraining metal member is wound around the first portion of the metal article either partially, or completely. For example, the constraining metal member may be a wire wound around the first portion of the metal article. In various embodiments, the constraining metal member is wound around the metal article by making multiple turns about the first portion of the metal article. The number of turns of the constraining metal member may vary depending on the size of the metal article, length of the constraining metal member and thermal expansion characteristics of the metal article. In some embodiments, the metal article is wound with the constraining metal member such that the constraining metal member forms one or more layers on the surface of the first portion of the metal article. In some embodiments, the metal article may be wound with two or more constraining metal members, one upon another, to form an assembly comprising multiple layers of the constraining metal members on the metal article. In various embodiments, the aspect ratio of the constraining metal member is in a range from about 10 to about 10,000. In one embodiment, the aspect ratio of the constraining metal member is in a range from about 10 to about 1000. In yet another embodiment, the aspect ratio of the constraining metal member is in a range from about 10 to about 100. In one embodiment, the constraining metal member has a fixed length and a variable width (or thickness), in which case, the aspect ratio for the constraining metal member may be determined by the ratio of the length of the constraining metal member to its average width (or thickness).

The constraining metal member may be selected so as to have a low coefficient of thermal expansion and a high elastic modulus at elevated temperatures. The constraining metal member may be wound about the first portion of the metal article in such a fashion so as to allow the first portion of the metal article to expand into close fitting contact with the constraining metal member upon heating. In various embodiments, the dimensions of the flange produced may be controlled by how tightly the constraining metal member is initially wound about the metal article. As the assembly of the metal article, the constraining metal member and the braze compound is heated, the metal article expands to a greater degree than the constraining metal member and, as noted, comes into a close fitting contact with the constraining metal member. Upon cooling, the close contact between the metal article and the constraining metal member inhibits contraction of that portion of the metal article in close fitting contact with the constraining metal member and the first braze compound. As noted, the constraining metal member is typically comprised of a material having a relatively low CTE which can be appropriately shaped (e.g. fashioned into a foil or a wire) for its use as the constraining metal member. In one embodiment, the constraining metal member comprises at least one of molybdenum, tungsten, silicon carbide, fused quartz, graphite, or glass. In one embodiment, the constraining metal member is selected from the group consisting of a hafnium-member, a zirconium-member, a chromium-member, a nickel-member, an iron-member, a molybdenum-member, a niobium-member, and combinations of two or more of the foregoing. As used herein the terms hafnium-member, zirconium-member, chromium-member, nickel-member, iron-member, molybdenum-member, and niobium-member refer to constraining metal members which comprise one or more of the foregoing named elements. Thus, a hafnium member comprises hafnium, a zirconium-member comprises zirconium, a chromium-member comprises chromium, a nickel member comprises nickel, an iron member comprises iron, a molybdenum member comprises molybdenum, and a niobium member comprises niobium. Those of ordinary skill in the art will appreciate that the constraining metal member may comprise a metal in its elemental form, a metal alloy, or a metallic substance which qualifies neither as a metal in its elemental form nor a metal alloy thereof. In a specific embodiment, the constraining metal member is a molybdenum-member and comprises elemental molybdenum. In an alternate embodiment, the constraining metal member is a molybdenum-member comprising a molybdenum alloy. In one embodiment, the constraining metal member comprises a lanthanated molybdenum. Lanthanated molybdenum may be a useful alternative to other molybdenum-based materials. In one embodiment, the constraining metal member is comprised of a lanthanated molybdenum comprising about 0.875% La₂O₃.

In a specific embodiment, the constraining metal member is a molybdenum wire. Molybdenum has a coefficient of thermal expansion, which is less than the coefficient of thermal expansion of various nickel-based superalloys suitable as materials of construction of the metal article starting material. CTE's of some exemplary metalic materials are illustrated in Table 1 below. As can be seen in the table, molybdenum metal, which is suitable for use as the constraining metal member has a CTE that is significantly lower than INCONEL 625, a material suitable for use as the metal article.

**Table 1: CTE of various metal materials**

| Material | CTE |
|---|---|
| Niobium | 7.1 x 10⁻⁶/°C at or near 20°C |
| Molybdenum | 4.8x10⁻⁶/°C at or near 20°C |
| INCONEL 625 | 13.1 x 10⁻⁶ /°C at or near 20°C |

An additional quality of molybdenum is that it has an elastic modulus significantly higher than that of various nickel-based superalloys. As noted, in one embodiment, the constraining metal member is comprised of a molybdenum alloy. Molybdenum and its alloys typically retain useful mechanical properties at elevated temperature. Because of the thermal and mechanical properties of molybdenum and its alloys, the use of constraining metal members comprising molybdenum and/or its alloys may be especially advantageous. Tungsten and silicon carbide may, in certain embodiments, serve advantageously as materials of construction for the constraining metal member as well.

In one embodiment, a thin wire of molybdenum may be wound multiple times about an end portion of a nickel alloy pipe (the first portion of the metal article) upon the outer surface of which a gold braze compound is disposed such that the gold braze compound, is in contact with both the outer surface of the pipe and the molybdenum wire. This assembly is then heated and subsequently cooled to produce a flanged metal article. In another embodiment, a thin molybdenum wire may be wound on a nickel alloy pipe, and gold braze compound is applied to the wound portion of the pipe such that the gold braze compound is in contact with the molybdenum wire. This assembly may then be heated and subsequently cooled to produce a flanged metal article.

The width of the constraining metal member may be adjusted appropriately depending on the expansion and contraction characteristics of the metal article in order to control the size and shape of the flange produced. In some embodiments, the constraining metal member is a wire of relatively uniform dimensions and having a diameter in a range from about 0.005 to about 0.025 inches and exemplifies a "thin" wire. In a specific embodiment, the diameter of the constraining metal member is about 0.012 inch. For example, the constraining metal member may be a molybdenum wire having a diameter in a range from about 0.005 to about 0.025 inches, and in a specific embodiment, the constraining metal member is a molybdenum wire having a diameter of about 0.012 inch. Typically, the constraining metal member is wound multiple times about the first portion of the metal article, although in certain embodiments multiple windings may not be required, for example when the constraining metal member is in the form of a tape. Typically, however, the constraining metal member is wound two or more times about the first portion of the metal article. In one embodiment, the constraining metal member is wound such that the assembly of the metal article, the constraining metal member, and the first braze compound contains between 5 and 1000 windings. In an alternate embodiment, the constraining metal member is wound such that the assembly of the metal article, the constraining metal member, and the first braze compound contains between 10 and 100 windings. In yet another embodiment, the constraining metal member is wound such that assembly of the metal article, the constraining metal member, and the first braze compound contains between 10 and 25 windings.

As noted, the metal article used to prepare the flanged metal article of the invention has a coefficient of thermal expansion CTE 1 which is greater than that of the constraining metal member CTE 2. In various embodiments, CTE 1 must be greater than CTE 2 in order for the constraining metal member to serve its function, which is to limit the expansion and contraction of the metal article during heating and cooling. In one embodiment, CTE 1 is at least 10% greater than CTE 2. In another embodiment, CTE 1 is from about 10% to about 300% greater than CTE 2. In an alternate embodiment, CTE 1 is from about 50% to about 250% greater than CTE 2. In yet another embodiment, CTE 1 is from about 35% to about 225% greater than CTE 2. In a specific embodiment, CTE 1 is about 200% greater than CTE 2. In one embodiment, the metal article comprises a nickel alloy having a CTE (CTE 1) which is about 200% greater than the CTE (CTE 2) of a constraining metal member comprising molybdenum.

As noted, one embodiment of the present invention provides a flanged metal article, comprising (a) a wound first portion of a metal article comprising a length of a constraining metal member; and (b) a first braze compound in contact with the constraining metal member and a surface of the wound first portion of the metal article; wherein the metal article has a coefficient of thermal expansion CTE 1, the constraining metal member has a coefficient of thermal expansion CTE 2, and CTE 1 is greater than CTE 2.

In another embodiment of the invention, the flanged metal article comprises (a) a flanged metal component joined to a ceramic component, wherein the flanged metal component is wound with a molybdenum wire, and wherein the flanged metal component comprises one or more of nickel, iron, cobalt, and chromium; and (b) a first braze compound in contact with the flanged metal component and a surface of the molybdenum wire, wherein the flanged metal component has a coefficient of thermal expansion CTE 1, the molybdenum wire has a coefficient of thermal expansion CTE 2, and CTE 1 is at least 100% greater than CTE 2.

In one embodiment, the present invention provides a method of making an article comprising a flanged metal component joined to a ceramic component, the method comprising (a) applying a first braze compound to a first portion of a metal article; (b) winding the first portion of the metal article with a length of a constraining metal member; (c) heating an assembly of the metal article, the constraining metal member and the first braze compound to a temperature above the solidus temperature of the first braze compound, typically a temperature in a range from about 300°C to about 2500°C, to provide a flanged metal article, wherein the metal article has a coefficient of thermal expansion CTE 1, the constraining metal member has a coefficient of thermal expansion CTE 2, and CTE 1 is greater than CTE 2; (d) contacting a flanged portion of the flanged metal article with a second braze compound and a ceramic article such that the second braze compound is disposed between the flanged portion of the metal article and the ceramic article; and (e) heating an assembly of the flanged metal article, the second braze compound and the ceramic article to a temperature above the solidus temperature of the second braze compound, typically a temperature in a range from about 300°C to about 2500°C, to provide the article comprising the flanged metal component joined to the ceramic component. Those of ordinary skill in the art will understand that heating steps (c) and (e) above may at times herein be referred to as "brazing" steps; step (c) representing a first brazing step and step (e) representing a second brazing step, each step being characterized by a brazing temperature above the solidus temperature of the first braze compound and second braze compound respectively. Typically, the temperature at which the second brazing step is carried out (the second brazing temperature) is lower than the temperature at which the first brazing step is carried out (the first brazing temperature). This precaution may help prevent unwanted changes in the braze joint formed in the first brazing step as a result of heat treatment in the second brazing step.

As will be appreciated by those of ordinary skill in the art, the flanged portion of the flanged metal article being joined to the ceramic article according to the method of the present invention may be an end-flange or a flange which is not an end-flange. In one embodiment, the second braze compound is applied to a flange formed at an end portion of a flanged metal article which is then joined to the ceramic article. The second braze compound may be the same or different from the first braze compound, but, as noted, is typically different from the first braze compound. Suitable braze compounds which may be employed as the second braze compound include those illustrated for the first braze compound. In one embodiment, the second braze compound is selected from the group consisting of gold, gold braze alloys, copper braze alloys, silver, silver braze alloys, palladium, palladium braze alloys, titanium braze alloys, vanadium braze alloys, nickel braze alloys, and combinations of two or more of the foregoing braze compounds. In some embodiments, the second braze compound is an active braze compound that promotes wetting of a ceramic surface. In one embodiment, the active braze compound comprises one or more reactive elements selected from the group consisting of titanium, zirconium, chromium, and yttrium. In another embodiment, the active braze compound comprises one or more rare earth elements.

Heating the assembly of the flanged metal article, the second braze compound and the ceramic article to a temperature above the solidus temperature of the second braze compound and subsequently cooling the assembly, creates a robust joint between the flanged metal component (flanged metal article) and the ceramic component (ceramic article). The flanged portion of the flanged metal article (the flange) remains subject to constraint by the constraining metal member and thus exhibits relatively little expansion during heating (or contraction during cooling) relative to the metal article from which it was formed, or the ceramic article to which it is being joined. Thus, in various embodiments, the constraining metal member compensates for the mismatch in thermal expansion characteristics between the metal article starting material and the ceramic component to which it is desired to be attached. By controlling the thermal expansion characteristics in and around the flanged portion of the flanged metal article being joined to the ceramic article, the flanged metal article and the ceramic article may be joined and damage to the ceramic article may be avoided during the heating and cooling cycle.

In one embodiment, while assembling an article comprising a flanged metal component joined to a ceramic component according to the method of the present invention, the width of the constraining metal member may be adjusted to optimize the match between the thermal expansion characteristics of both the flanged metal component and the ceramic component.

As will be appreciated by those of ordinary skill in the art, the amount of braze compound employed should be sufficient to create a strong bond between the metal article and the constraining metal member in the case of the first braze compound, and between the flanged portion of the flanged metal article and a ceramic article in the case of the second braze compound. In some embodiments, the first braze compound or the second braze compound applied to the metal article or the flanged metal article has a thickness in a range from about 0.0001 to about 0.05 inches. For example, a gold braze compound may be applied to the metal article and has a thickness in a range from about 0.001 to about 0.005 inches. In another example, the gold braze compound applied to the metal article has a thickness of about 0.002 inch. The braze compound may be applied in various physical forms. For example, the braze compound may be applied as a foil, a ribbon, a wire, a cream, a preform, or a paste, among others.

In one embodiment, the braze compound is a transient liquid phase (TLP) braze compound. In one embodiment, the present invention employs a first and a second braze compound, each of which is a TLP braze compound. The use of TLP braze compounds may be advantageous in instances in which multiple braze joints must be created in an article provided by the present invention, and wherein the braze joints are created in separate brazing steps at the same or similar brazing temperatures. In an alternate embodiment, the present invention provides a method of preparing a flanged metal article comprising plurality of braze joints formed in a single heating cycle.

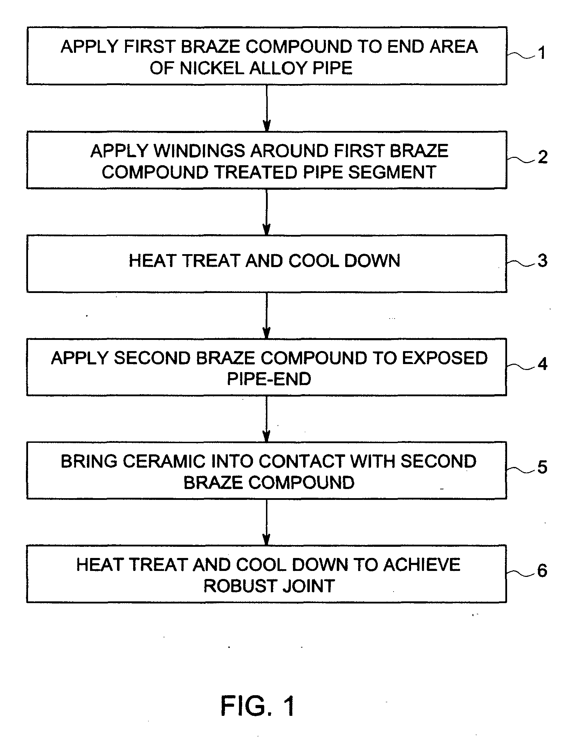

With reference to Fig. 1, which shows a process flow diagram for making a metal flange of the invention (steps 1-3), comprises step 1 of applying a first braze compound to an outer end portion of a nickel-alloy pipe. Then, in step 2, molybdenum wire is wound about the segment of the pipe treated with the first braze compound in step 1. The assembly of the pipe, the first braze compound and the molybdenum wire is then heat-treated and cooled down in step 3 to form a metal flange. The figure further illustrates a method (steps 1-6) for preparing an article comprising a flanged metal component joined to a ceramic component. Thus, following steps 1-3, the second braze compound is disposed on the exposed pipe end (the flanged portion of the flanged metal article) in step 4 and the ceramic article is brought into contact with the second braze compound in step 5 to form a connection between the metal flange and the ceramic article. Finally, in step 6, the assembly of the flanged metal article, the second braze compound and the ceramic article is heat-treated and cooled down to achieve a robust joint between them and provide a product article comprising a flanged metal component joined to a ceramic component.

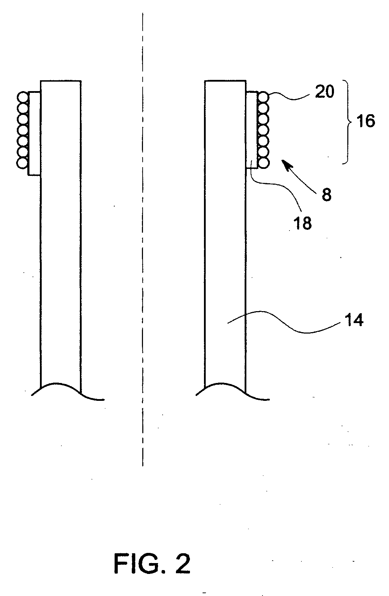

Fig. 2 is a schematic presentation of cross sectional view of an assembly 8 provided by the present invention. No flange is present as the Fig 2 represents the assembly prior to heating. The assembly 8 comprises a metal article 14, a first braze compound 18 disposed on an end portion 16 of the metal article 14, and a length of a constraining metal member 20 wound about the end portion of the metal article and in contact with the first braze compound.

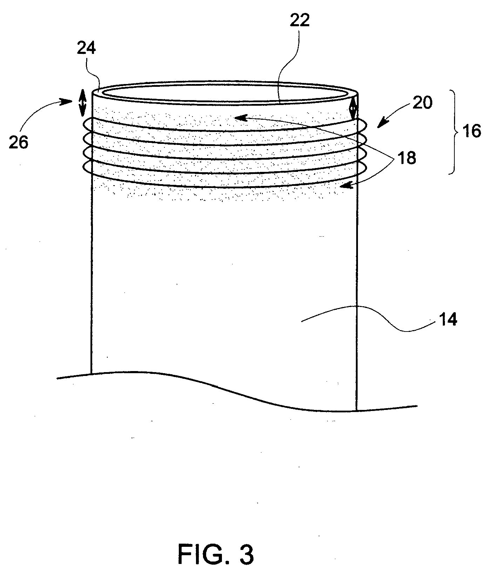

Fig. 3 shows a schematic representation of a metal cylinder, which is to be modified using the method of the present invention to produce a flanged metal article. As in Fig. 2, no flange is present, because the figure represents an assembly of the invention before heat treatment and flange formation. In some embodiments, the metal article 14 is a nickel alloy pipe, the first braze compound 18 is a gold braze compound, and the constraining metal member 20 is a molybdenum wire, wherein the molybdenum wire is wound about the pipe having an inner surface 22 and a pipe top surface 24. In the embodiment shown in Fig.3, a gap 26 is present between the pipe top surface 24 and the top of the wrapped portion of the assembly comprising the constraining metal member 20. In certain embodiments, the gap 26 is kept as small as possible in order to minimize the portion of the pipe not in contact with the constraining metal member and the braze compound. Minimizing gap 26 can help reduce deformation and/or crack formation when joining the top portion of the pipe to a ceramic article.

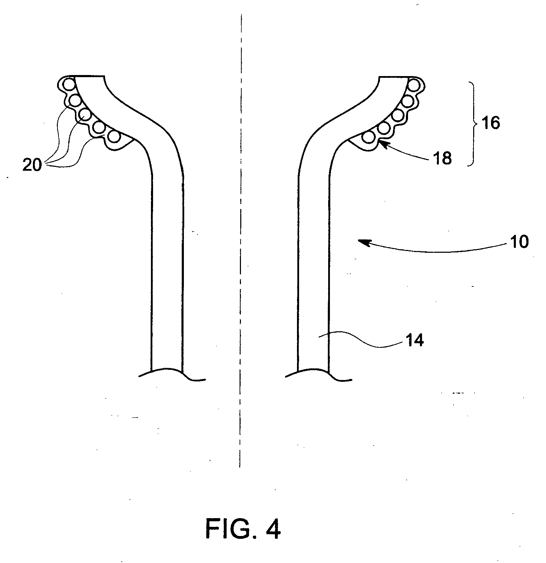

Fig. 4 is a schematic representation showing a cross sectional view of a flanged cylindrical metal article 10 provided by the present invention. The constraining metal member 20 is shown as wound multiple times about the end portion 16 of the metal article 14, wherein the first braze compound 18 is disposed on the end portion, such that the first braze compound 18, is in contact with both the outer surface of the article 14 and the constraining metal member 20.

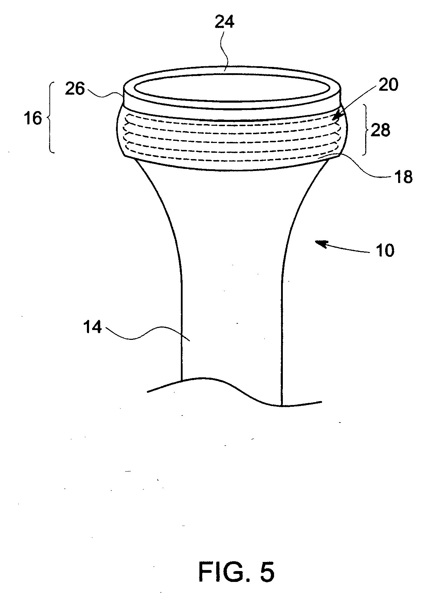

Now referring to Fig. 5, the figure represents a flanged metal article 10 made from a metal cylinder 14, which has been modified using the method of the present invention to produce the flanged metal article. The end portion 16 of the cylinder 14 wound with the constraining metal member 20 and in contact with the first braze compound 18 comprises flange 28 which is formed upon heat treatment of an assembly of the metal cylinder lacking a flanged portion, the first braze compound 18 and the constraining metal member 20. As noted, the metal cylinder expands to a greater degree than the constraining metal member 20 and comes into a close fitting contact with the constraining metal member during the heating step. Upon cooling, the close contact between the metal cylinder and the constraining metal member 20 inhibits contraction of that portion of the metal cylinder in contact with the first braze compound and the constraining metal member and leads to a to the formation of flange 28, also referred to as flared-end portion 28.

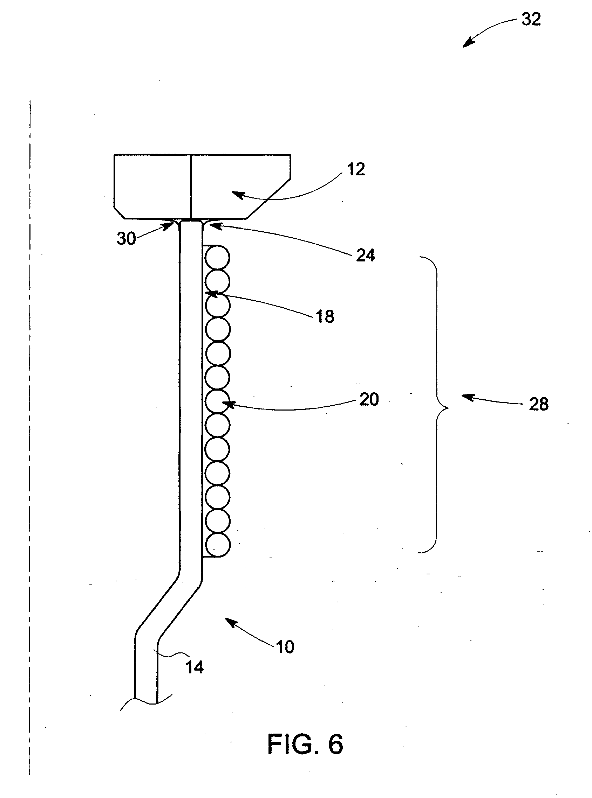

Now, referring to Fig. 6, the figure shows a schematic representation of a cross sectional view of an article 32 provided by the present invention comprising a flanged metal component 10 joined to a ceramic component 12. In the embodiment shown, the flanged metal article is joined to ceramic article 12 by applying a second braze compound 30 between the top surface 24 of the flanged metal article and the ceramic article 12. The flanged metal article 10 may have a compatible shape and size for joining to the ceramic article 12. In one exemplary embodiment, the flanged metal article 10 is present in combination with a concentric ceramic cylinder.

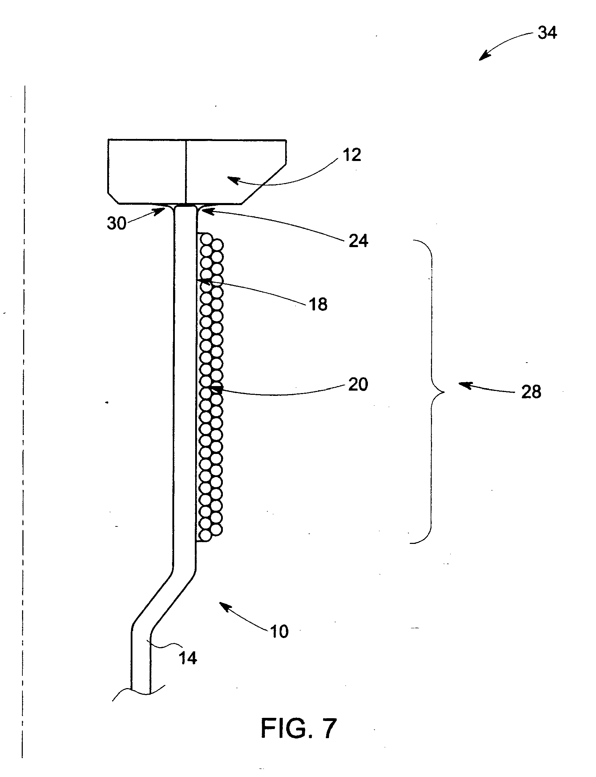

Fig.7 shows a schematic representation of a cross sectional view of an article 34 provided by the present invention comprising a flanged metal component 10 joined to a ceramic component 12. In the embodiment shown, the flanged metal article which comprises a flanged portion comprising multiple layers of the constraining metal member 20, is joined to ceramic article 12 via a second braze compound 30 disposed between the top surface 24 of the flanged metal article and the ceramic component 12.

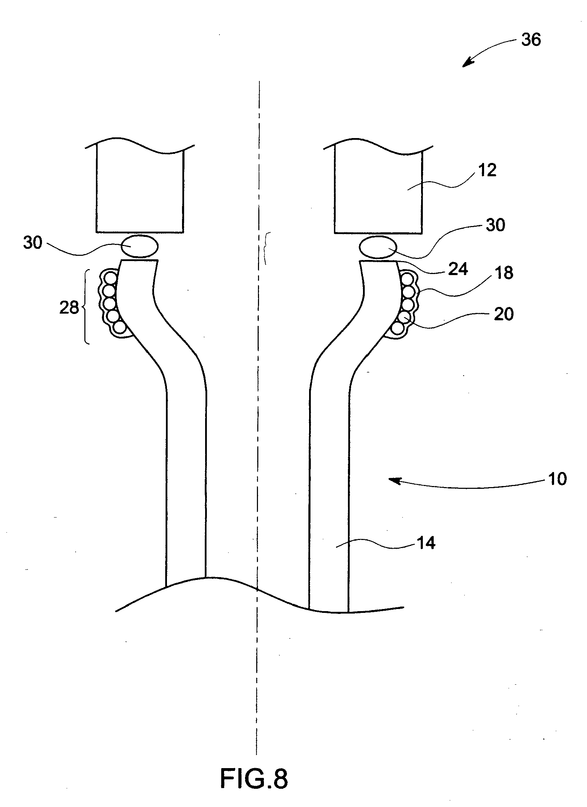

Fig 8 illustrates an article 36 provided by the present invention comprising a flanged metal article 10 joined to a ceramic article 12. In the embodiment illustrated in Fig 7 the flanged metal article 10 comprises a flange 28, a first braze compound 18 and a constraining metal member 20 wound about a first portion of the starting metal article 14 which has been subjected to heat treatment and flange formation according to one or more embodiments of the present invention.

In one embodiment, the first braze compound 18, and the second braze compound 30 may include a gold-based braze material, and can be joined to the metal article 14 by one or more joining techniques employed in brazing. The braze compound may be disposed directly on the surface of the metal article 14 by a variety of methods such as cladding, pasting, welding, plating, deposition, casting, mechanical attachment, or thermal spray techniques. The second braze compound 30 is used to join the flanged metal component 10 to the ceramic component 12 and may help to accommodate mechanical strains which arise from heat treatment of the assembly of the flanged metal component, the second braze compound and the ceramic component. The first braze compound 18 and the second braze compound 30 can be of identical or different materials. In one embodiment, the first braze compound 18, and the second braze compound 30 are capable of operating in harsh environments, for example an environment in which the braze joint is simultaneously exposed to one or more corrosive chemical species (e.g. a gaseous mixture of water and hydrogen sulfide gas) and high temperature (e.g. 500°C). Such environments are at times herein referred to as harsh thermo-chemical environments.

Various additional layers may be employed according to one or more embodiments of the present invention. For example, an additional metallic layer may be disposed on an end portion of the starting metal article, on a braze compound, or on a ceramic component of a flanged article comprising a flanged metal component joined to a ceramic component. In one embodiment, the present invention provides an article comprising a flanged metal component joined to a ceramic component wherein a metallic interlayer is disposed between a second braze compound and the ceramic component. Such a metallic interlayer may facilitate the joining of the flanged metal component with the ceramic component. Suitable sources of such additional metal layers include metal foils, coatings, and powders. In one embodiment, the additional metal layer comprises molybdenum and magnesium and may be incorporated into an article provided by the present invention by one or more techniques known those of ordinary skill in the art. In one embodiment, an additional layer is incorporated into an article provided by the present invention in order to promote wetting of one or more surfaces of the article. For example a wetting layer comprising nickel may be employed to enhance the joining compatibility of the second braze compound. Suitable wetting layers may be prepared by, for example; electroplating techniques, and electroless plating techniques such as eletroless nickel plating. Furthermore, various protective coatings may be disposed over the braze compounds. In one embodiment, a protective coating is applied to exposed portions of the second braze compound 30 (Fig. 8) in order to protect the joint between the flanged metal component and the ceramic component from thermo-chemical environmental degradation.

### EXAMPLES

Materials: A brittle low expansion alumina tube with a diameter of 5 inch, and a wall thickness of 0.25 inch was used as the ceramic component. The high expansion metal article to be joined directly with the ceramic component was a 0.035 inch thick INCONEL® 625 tube of approximately the same diameter (5 inch). A 30 foot length of molybdenum wire (Rembar Co.) having a diameter of 0.015 inch was used as a constraining metal member, and 99.99% gold foil (Williams Advanced Materials) having a thickness of 0.002 inches, a width of 0.5 inches and a length of 16 inches was used as the first braze compound. PALCUSIL 10 (Morgan Technical Ceramics-Wesgo Metals Division) was used as the second braze compound.

### Example 1: Preparation of a Flanged Metal Article

INCONEL® 625 sheet having a thickness of about 0.035 inches was rolled into a cylindrical shape and seam welded to produce a tube having a diameter of about 4.85 inches. A metal plug was inserted in the end of the tube to maintain tube roundness and provide support about a rotatable axis. A gold foil first braze compound was tack welded to the outer surface of an end portion of the tube. A 30 foot length of molybdenum wire having a diameter of 0.015 inch was wound by hand on top of the gold foil first braze compound. Multiple turns of the molybdenum wire were made about the tube such that each turn (or winding) was close to or in contact with an adjacent turn and in contact with the first braze compound. The ends of the molybdenum wire were then twisted together to hold the turns in position, and the resultant assembly was placed in a vacuum furnace and heated to a temperature of 1107°C for one minute to form a flanged metal article. Such a heating protocol is typical when using gold-based braze compounds. The flanged metal article exhibited uniform braze compound flow in and around the area of the flange.

On heat treatment, the tube expanded to a greater degree than the molybdenum wire and came into a close fitting contact with the molybdenum wire. Upon cooling, the molybdenum wire constrained the end portion of the tube and prevented its contraction back to its original shape and size, with the result that the end portion of the tube was converted into a metal flange as shown in Fig. 4, for example. The resultant deformation of the tube was measured using a coordinate measuring machine (CMM). Analysis of the results obtained with the coordinate measuring machine suggested that a 0.04 inch thick molybdenum wire might be the optimal thickness for the constraining metal member in conjunction with 0.035 inch thick metal article used in this Example. In addition, the results suggested that the use of a 0.04 inch thick molybdenum wire as the constraining metal member would allow a better match between the thermal expansion characteristics of the resultant flange and an alumina ceramic component.

### Example 2:

Three INCONEL® 625 tubes having a thickness of 0.035 inches and a diameter of about 5 inches were which were treated with a gold first braze compound, wound with the 0.04 inch thick molybdenum wire, and heat treated as in Example 1 to provide three flanged metal articles. A second braze compound (PALCUSIL-10) was applied to the top surface (See, for example, element 24 of Fig.5) of the flanged portion of each of the three flanged metal articles. Three alumina ceramic tubes each having a diameter and thickness approximately the same as the flanged portion of the flanged metal article were then brought into contact with each of the three flanged metal articles such that the second braze compound contacted both the flanged metal article and the ceramic tube. The assembly of the flanged metal article, the second braze compound and the ceramic tube were then heated under vacuum according to the following heating protocol; 725°C/3 hrs, 830°C/ 1minute and 881°C/1 minute, to join the ceramic tube to the flanged metal article and afford the product articles comprising a flanged metal component joined to a ceramic component. The gold-containing braze joint between the molybdenum wire and the INCONEL 625 tube was not disturbed by this second heating step, since the second braze compound (PALCUSIL-10) effectively joined the ceramic tube to the flanged metal article at a sufficiently low temperature such that the first braze compound did not flow during the second heating protocol.

Tensile tests were conducted on each of the three product articles. Thus a tensile load was applied on the end portion of the INCONEL 625 tube. Ultimate tensile loads of 3635 foot-pounds (Article 1), 14,898 foot-pounds (Article 2), and 14,414 foot-pounds (Article 3) were recorded. Failure of the first piece was observed directly in the braze compound due to the insufficient coverage of the second braze compound between the joined surfaces of the ceramic tube component and the flanged INCONEL 625 tube component. In the cases of Article 2 and Article 3, failure was observed to occur by ceramic fracture adjacent to the PALCUSIL-10 braze joint. Some ceramic material remained intact on the INCONEL 625 flange after failure, indicating the strength of the braze joint exceeded the strength of the ceramic tube near the joint.

### Comparative Example 1: Brazing Without Constrained Metal Member

As a control experiment, an INCONEL 625 tube like that employed in Examples 1 and 2 was brazed to a ceramic tube in the absence of a constraining metal member and as a result the ceramic tube failed during the brazing heat treatment. This result is consistent with an analysis that predicted that stresses induced in the ceramic during the brazing step would exceed the strength of the ceramic. The result of the Comparative Example 1 stands in stark contrast to the results obtained in Example 2, wherein the residual stress in the ceramic portion of the article at room temperature was sufficiently low to allow a significant additional tensile load to be superimposed before failure of the ceramic.

While the present invention is described with reference to Examples, Comparative Examples, and exemplary embodiments, it will be understood by those of ordinary skill in the art that various changes may be made and equivalent elements may be substituted for claim elements used to describe the invention. In addition, modifications may be made to the teachings of the invention to adapt it to a particular application.

Therefore, it is intended that the invention not be limited to the embodiment disclosed for carrying out this invention, but that the invention includes all embodiments falling within the scope of the intended claims. This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method of making a flanged metal article (10), the method comprising:
(a) applying a first braze compound (18) to a first portion (16) of a metal article (14);
(b) winding the first portion (16) of the metal article with a length of a constraining metal member (20); and
(c) heating an assembly of the metal article (14), the constraining metal member (20), and the first braze compound (18) to a temperature above the solidus temperature of the braze compound to provide a flanged metal article (10), wherein the flanged portion of the flanged metal article remains subject to constraint by the constraining metal member and thus exhibits relatively little expansion during heating or contraction during cooling relative to the metal article from which it was formed;
wherein the metal article (14) has a coefficient of thermal expansion CTE 1, the constraining metal member (20) has a coefficient of thermal expansion CTE 2, and CTE 1 is greater than CTE 2.

2. The method according to claim 1, wherein CTE 1 is at least 10% greater than CTE 2.

3. The method according to any preceding claim, wherein the metal article comprises one or more superalloys.

4. The method according to any preceding claim, wherein the superalloys are selected from the group consisting of nickel-based superalloys, iron-based superalloys, cobalt-based superalloys, and combinations of two or more of the foregoing.

5. The method according to any preceding claim, wherein the metal article (10) is a cylinder.

6. The method according to any preceding claim, wherein the metal article is a pipe, or a rod.

7. The method according to any preceding claim, wherein the first portion of the metal article is an end portion.

8. The method according to any preceding claim, wherein the first braze compound (18) is selected from the group consisting of gold-based braze compounds, copper-based braze compounds, silver-based braze compounds, platinum-based braze compounds, palladium-based braze compounds, titanium-based braze compounds, vanadium-based braze compounds, nickel-based braze compounds, and combinations thereof.

9. The method according to any preceding claim, wherein the constraining metal member (20) is selected from the group consisting of a hafnium-member, a zirconium-member, a chromium-member, a nickel-member, an iron-member, a molybdenum-member, a niobium-member, and combinations of two or more of the foregoing.

10. The method according to any preceding claim, wherein the first braze compound is applied to the first portion of the metal article prior to winding of the first portion of the metal article with the constraining metal member.

11. The method according to any preceding claim, wherein the first braze compound is applied to the first portion of the metal article after winding of the first portion of the metal article with the constraining metal member.

12. A flanged article (36), comprising:
(a) a flanged metal component (10) joined to a ceramic component (20), wherein the flanged metal component (10) is wound with a molybdenum wire (20) the flanged portion of the flanged metal article remains subject to constraint by the wire and wherein the flanged metal component comprises one or more of nickel, iron, cobalt, and chromium; and
(b) a first braze compound (18) in contact with the flanged metal component (10) and a surface of the molybdenum wire (20),
wherein the flanged metal component (10) has a coefficient of thermal expansion CTE 1, the molybdenum wire has a coefficient of thermal expansion CTE 2, and CTE 1 is at least 100% greater than CTE 2.

13. The flanged metal article (36) of claim 12, wherein the flanged metal component (10) comprises multiple layers of the molybdenum wire (20).

14. A method of making an article (36) comprising a flanged metal component (10) joined to a ceramic component (12), the method comprising:
(a) applying a first braze compound (18) to a first portion (16) of a metal article;
(b) winding the first portion of the metal article with a length of a constraining metal member (20);
(c) heating an assembly of the metal article (10), the constraining metal member (20) and the first braze compound (18) to a temperature above the solidus temperature of the first braze compound (18) to provide a flanged metal article (36), wherein the flanged portion of the flanged metal article remains subject to constraint by the constraining metal member and thus exhibits relatively little expansion during heating or contraction during cooling relative to the metal article from which it was formed, wherein the metal article (14) has a coefficient of thermal expansion CTE 1, the constraining metal member (20) has a coefficient of thermal expansion CTE 2, and CTE 1 is greater than CTE 2;
(d) contacting a flanged portion (10) of the flanged metal article (36) with a second braze compound (30) and a ceramic article (12) such that the second braze compound is disposed between the flanged portion of the metal article and the ceramic article; and
(e) heating an assembly of the flanged metal article, the second braze compound and the ceramic article to a temperature above the solidus temperature of the second braze compound to provide the article comprising the flanged metal component joined to the ceramic component.

## Patentansprüche

1. Verfahren zum Herstellen eines geflanschten Metallobjektes (10), wobei das Verfahren Folgendes umfasst:
(a) Aufbringen einer ersten Hartlötverbindung (18) auf einen ersten Abschnitt (16) eines Metallobjektes (14);
(b) Bewickeln des ersten Abschnitts (16) des Metallobjektes mit einer Länge eines einschränkenden Metallelementes (20); und
(c) Erwärmen einer Baugruppe aus dem Metallobjekt (14), dem einschränkenden Metallelement (20) und der ersten Hartlötverbindung (18) auf eine Temperatur oberhalb der Solidustemperatur der Hartlötverbindung, um ein geflanschtes Metallobjekt (10) bereitzustellen, wobei der geflanschte Abschnitt des geflanschten Metallobjektes einer Einschränkung durch das einschränkende Metallelement unterworfen ist und daher relativ eine kleine Ausdehnung während der Erwärmung oder Kontraktion während der Abkühlung gegenüber dem Metallobjekt aufweist, aus dem es gebildet wurde;
wobei das Metallobjekt (14) einen thermischen Ausdehnungskoeffizienten CTE 1 hat, das einschränkende Metallelement (20) einen thermischen Ausdehnungskoeffizienten CTE 2 hat und CTE 1 größer als CTE 2 ist.

2. Verfahren nach Anspruch 1, wobei CTE 1 mindestens 10 % größer als CTE 2 ist.

3. Verfahren nach einem der vorherigen Ansprüche, wobei das Metallobjekt ein oder mehrere Superlegierungen umfasst.

4. Verfahren nach einem der vorherigen Ansprüche, wobei die Superlegierungen aus der Gruppe, bestehend aus Superlegierungen auf Nickelbasis, Superlegierungen auf Eisenbasis, Superlegierungen auf Kobaltbasis und Kombinationen aus zwei oder mehr der vorgenannten, ausgewählt werden.

5. Verfahren nach einem der vorherigen Ansprüche, wobei das Metallobjekt (10) ein Zylinder ist.

6. Verfahren nach einem der vorherigen Ansprüche, wobei das Metallobjekt ein Rohr oder eine Stange ist.

7. Verfahren nach einem der vorherigen Ansprüche, wobei der erste Abschnitt des Metallobjektes ein Endabschnitt ist.

8. Verfahren nach einem der vorherigen Ansprüche, wobei die erste Hartlötverbindung (18) aus der Gruppe, bestehend aus Hartlötverbindungen auf Goldbasis, Hartlötverbindungen auf Kupferbasis, Hartlötverbindungen auf Silberbasis, Hartlötverbindungen auf Platinbasis, Hartlötverbindungen auf Palladiumbasis, Hartlötverbindungen auf Titanbasis, Hartlötverbindungen auf Vanadiumbasis, Hartlötverbindungen auf Nickelbasis und Kombinationen derselben, ausgewählt wird.

9. Verfahren nach einem der vorherigen Ansprüche, wobei das einschränkende Metallelement (20) aus der Gruppe, bestehend aus einem Hafniumelement, einem Zirconiumelement, einem Chromelement, einem Nickelelement, einem Eisenelement, einem Molybdänelement, einem Niobiumelement und Kombinationen aus zwei oder mehr derselben, ausgewählt wird.

10. Verfahren nach einem der vorherigen Ansprüche, wobei die erste Hartlötverbindung auf den ersten Abschnitt des Metallobjektes vor dem Bewickeln des ersten Abschnitts des Metallobjektes mit dem einschränkenden Metallelement aufgebracht wird.

11. Verfahren nach einem der vorherigen Ansprüche, wobei die erste Hartlötverbindung auf den ersten Abschnitt des Metallobjektes nach dem Bewickeln des ersten Abschnitts des Metallobjektes mit dem einschränkenden Metallelement aufgebracht wird.

12. Geflanschtes Objekt (36), umfassend:
(a) eine geflanschte Metallkomponente (10), die mit einer Keramikkomponente (20) verbunden ist, wobei die geflanschte Metallkomponente (10) mit einem Molybdändraht (20) bewickelt ist, der geflanschte Abschnitt des geflanschten Metallobjektes einer Einschränkung durch den Draht unterworfen bleibt und wobei die geflanschte Metallkomponente eines oder mehrere aus Nickel, Eisen, Kobalt und Chrom umfasst; und
(b) eine erste Hartlötverbindung (18) in Kontakt mit der geflanschten Metallkomponente (10) und einer Fläche des Molybdändrahtes (20),
wobei die geflanschte Metallkomponente (10) einen thermischen Ausdehnungskoeffizienten CTE 1 hat, der Molybdändraht einen thermischen Ausdehnungskoeffizienten CTE 2 hat und CTE 1 mindestens 100 % größer als CTE 2 ist.

13. Geflanschtes Metallobjekt (36) nach Anspruch 12, wobei die geflanschte Metallkomponente (10) mehrere Schichten des Molybdändrahtes (20) umfasst.

14. Verfahren zum Herstellen eines Objektes (36), das eine geflanschte Metallkomponente (10) umfasst, die mit einer Keramikkomponente (12) kombiniert ist, wobei das Verfahren Folgendes umfasst:
(a) Aufbringen einer ersten Hartlötverbindung (18) auf einen ersten Abschnitt (16) eines Metallobjektes;
(b) Bewickeln des ersten Abschnitts des Metallobjektes mit einer Länge eines einschränkenden Metallelementes (20);
(c) Erwärmen einer Baugruppe aus dem Metallobjekt (10), dem einschränkenden Metallelement (20) und der ersten Hartlötverbindung (18) auf eine Temperatur oberhalb der Solidustemperatur der ersten Hartlötverbindung (18), um ein geflanschtes Metallobjekt (36) bereitzustellen, wobei der geflanschte Abschnitt des geflanschten Metallobjektes einer Einschränkung durch das einschränkende Metallelement unterworfen bleibt und daher eine relativ kleine Ausdehnung während der Erwärmung oder Kontraktion während der Abkühlung gegenüber dem Metallobjekt aufweist, aus dem es gebildet wurde, wobei das Metallobjekt (14) einen thermischen Ausdehnungskoeffizienten CTE 1 hat, das einschränkende Metallelement (20) einen thermischen Ausdehnungskoeffizienten CTE 2 hat und CTE 1 größer als CTE 2 ist;
(d) Inkontaktbringen eines geflanschten Abschnitts (10) des geflanschten Metallobjektes (36) mit einer zweiten Hartlötverbindung (30) und einem Keramikobjekt (12) derart, dass die zweite Hartlötverbindung zwischen dem geflanschten Abschnitt des Metallobjektes und dem Keramikobjekt angeordnet ist; und
(e) Erwärmen einer Baugruppe aus dem geflanschten Metallobjekt, der zweiten Hartlötverbindung und dem Keramikobjekt auf eine Temperatur oberhalb der Solidustemperatur der zweiten Hartlötverbindung, um das Objekt bereitzustellen, das das geflanschte Metallobjekt, kombiniert mit dem Keramikobjekt, umfasst.

## Revendications

1. Procédé de fabrication d'un article métallique bridé (10), le procédé comprenant:
(a) l'application d'un premier composé de brasage (18) sur une première portion (16) d'un article métallique (14) ;
(b) l'enroulement de la première portion (16) de l'article métallique avec une longueur d'un élément métallique de contrainte (20) ; et
(c) le chauffage d'un assemblage de l'article métallique (14), de l'élément métallique de contrainte (20) et du premier composé de brasage (18) à une température supérieure à la température du solidus du composé de brasage pour donner un article métallique bridé (10), dans lequel la portion bridée de l'article métallique bridé reste soumise à des contraintes exercées par l'élément métallique de contrainte et présente donc une dilatation pendant le chauffage ou une contraction pendant le refroidissement relativement faible par rapport à l'article métallique à partir duquel elle a été formée ;
dans lequel l'article métallique (14) a un coefficient de dilatation thermique CTE 1, l'élément métallique de contrainte (20) a un coefficient de dilatation thermique CTE 2 et CTE 1 est plus grand que CTE 2.

2. Procédé selon la revendication 1, dans lequel CTE 1 est au moins 10 % plus grand que CTE 2.

3. Procédé selon l'une quelconque des revendications précédentes, dans lequel l'article métallique comprend un ou plusieurs superalliages.

4. Procédé selon l'une quelconque des revendications précédentes, dans lequel les superalliages sont sélectionnés dans le groupe constitué des superalliages à base de nickel, des superalliages à base de fer, des superalliages à base de cobalt et des combinaisons de deux ou plus des superalliages précédents.

5. Procédé selon l'une quelconque des revendications précédentes, dans lequel l'article métallique (10) est un cylindre.

6. Procédé selon l'une quelconque des revendications précédentes, dans lequel l'article métallique est un tube ou une barre.

7. Procédé selon l'une quelconque des revendications précédentes, dans lequel la première portion de l'article métallique est une portion d'extrémité.

8. Procédé selon l'une quelconque des revendications précédentes, dans lequel le premier composé de brasage (18) est sélectionné dans le groupe constitué des composés de brasage à base d'or, des composés de brasage à base de cuivre, des composés de brasage à base d'argent, des composés de brasage à base de platine, des composés de brasage à base de palladium, des composés de brasage à base de titane, des composés de brasage à base de vanadium, des composés de brasage à base de nickel et de leurs combinaisons.

9. Procédé selon l'une quelconque des revendications précédentes, dans lequel l'élément métallique de contrainte (20) est sélectionné dans le groupe constitué d'un élément en hafnium, d'un élément en zirconium, d'un élément en chrome, d'un élément en nickel, d'un élément en fer, d'un élément en molybdène, d'un élément en niobium et de combinaisons de deux des éléments précédents ou plus.

10. Procédé selon l'une quelconque des revendications précédentes, dans lequel le premier composé de brasage est appliqué sur la première portion de l'article métallique avant l'enroulement de la première portion de l'article métallique avec l'élément métallique de contrainte.

11. Procédé selon l'une quelconque des revendications précédentes, dans lequel le premier composé de brasage est appliqué sur la première portion de l'article métallique après l'enroulement de la première portion de l'article métallique avec l'élément métallique de contrainte.

12. Article bridé (36), comprenant :
(a) un composant métallique bridé (10) assemblé à un composant en céramique (20), dans lequel le composant métallique bridé (10) est enroulé avec un fil en molybdène (20), la portion bridée de l'article métallique bridé reste soumise à des contraintes exercées par le fil et dans lequel le composant métallique bridé comprend un ou plusieurs métaux parmi le nickel, le fer, le cobalt et le chrome ; et
(b) un premier composé de brasage (18) en contact avec le composant métallique bridé (10) et une surface du fil en molybdène (20),
dans lequel le composant métallique bridé (10) a un coefficient de dilatation thermique CTE 1, le fil en molybdène a un coefficient de dilatation thermique CTE 2 et CTE 1 est au moins à 100 % plus grand que CTE 2.

13. Article métallique bridé (36) selon la revendication 12, dans lequel le composant métallique bridé (10) comprend plusieurs couches du fil en molybdène (20).

14. Procédé de fabrication d'un article (36) comprenant un composant métallique bridé (10) assemblé à un composant en céramique (12), le procédé comprenant :
(a) l'application d'un premier composé de brasage (18) sur une première portion (16) d'un article métallique ;
(b) l'enroulement de la première portion de l'article métallique avec une longueur d'un élément métallique de contrainte (20) ;
(c) le chauffage d'un assemblage de l'article métallique (10), de l'élément métallique de contrainte (20) et du premier composé de brasage (18) à une température supérieure à la température du solidus du premier composé de brasage (18) pour donner un article métallique bridé (36), dans lequel la portion bridée de l'article métallique bridé reste soumise à des contraintes exercées par l'élément métallique de contrainte et présente donc une dilatation pendant le chauffage ou une contraction pendant le refroidissement relativement faible par rapport à l'article métallique à partir duquel elle a été formée, dans lequel l'article métallique (14) a un coefficient de dilatation thermique CTE 1, l'élément métallique de contrainte (20) a un coefficient de dilatation thermique CTE 2 et CTE 1 est plus grand que CTE 2 ;
(d) la mise en contact d'une portion bridée (10) de l'article métallique bridé (36) avec un deuxième composé de brasage (30) et un article en céramique (12) de telle sorte que le deuxième composé de brasage soit disposé entre la portion bridée de l'article métallique et l'article en céramique ; et
(e) le chauffage d'un assemblage de l'article métallique bridé, du deuxième composé de brasage et de l'article en céramique à une température supérieure à la température du solidus du deuxième composé de brasage pour donner l'article comprenant le composant métallique bridé assemblé au composant en céramique.
